# EUROPÄISCHE PATENTSCHRIFT

(11) **EP 2 072 795 B1**
(45) Veröffentlichungstag und Bekanntmachung des Hinweises auf die Patenterteilung: **19.09.2012**
(21) Anmeldenummer: 08170769.7
(22) Anmeldetag: 05.12.2008
(51) Int. Cl.: F02M 31/12, H05B 3/14

(54) **Heizeinrichtung für Kraftstoff**
Heating device for fuel
Dispositif de chauffage pour carburant

(30) Priorität: 21.12.2007 DE 102007062153; 23.10.2008 DE 102008052918
(43) Veröffentlichungstag der Anmeldung: 24.06.2009
(73) Patentinhaber: Mahle International GmbH, 70376 Stuttgart (DE)
(72) Erfinder: Beetz, Klaus, 76149, Karlsruhe (DE); Kissner, Gerd, 70199, Stuttgart (DE)
(74) Vertreter: BRP Renaud & Partner

(56) Entgegenhaltungen:
- EP-A1- 1 036 930
- EP-A2- 1 385 073
- DE-U1- 29 911 711
- FR-A1- 2 634 090
- GB-A- 2 146 488
- US-A- 5 153 555

## Beschreibung

Die vorliegende Erfindung betrifft eine Heizeinrichtung für Kraftstoff, insbesondere für Dieselkraftstoff, mit mindestens einem PTC-Heizelement und einer mit diesem in thermischem Kontakt stehenden Wärmeübertragungseinrichtung gemäß dem Oberbegriff des Anspruchs 1. Die Erfindung betrifft außerdem ein mit einer derartigen Heizeinrichtung ausgestattetes Kraftfahrzeug.

Um auch bei geringen Temperaturen die Filterwirkung eines Dieselkraftstofffilters aufrechterhalten zu können, ist die Verwendung von Heizeinrichtungen zum Aufheizen des zu filternden Kraftstoffes seit langem bekannt. Durch das Aufheizen wird ein im Dieselkraftstoff enthaltender Paraffinanteil verflüssigt, welcher ansonsten bei niedrigen Temperaturen ausfallen würde und zu einem Zusetzen des Kraftstofffilters führen kann. Dabei sind zahlreiche Heizeinrichtungen in der Art von sogenannten "PTC-Heizelementen" ausgeführt, welche kaltleitende Thermistoren aufweisen, die einen positiven Temperaturkoeffizienten besitzen.

Eine gattungsgemäße Heizeinrichtung ist aus der DE 10 2006 055 216 A1 bekannt, wobei einige PTC-Heizelemente und eine mit diesem in thermischem Kontakt stehenden Wärmeübertragungseinrichtung, die zwei Wärmeübertragungselemente aufweist, vorgesehen ist. Die Wärmeübertragungseinrichtung und das wenigstens eine PTC-Heizelement sind in einem rohrförmigen Gehäuse aus Kunststoff angeordnet, durch welches während des Betriebs der Heizeinrichtung der zu erwärmende Dieselkraftstoff strömt.

Aus der DE 299 11 711 U1 ist eine Vorrichtung zum Vorheizen von Dieselkraftstoff in der Kraftstoffzuführung eines Verbrennungsmotors mit wenigstens einem Heizelement (PTC-Element) mit positivem Temperaturkoeffizienten des elektrischen Widerstandes bekannt.

Aus der GB 2 146 488 A sowie aus der EP 1 385 488 A sind weitere Heizeinrichtungen, insbesondere für Kraftstofffilter bekannt.

Eine Heizeinrichtung für Dieselkraftstoff unter Verwendung mindestens eines PTC-Heizelementes ist auch aus der EP 1 036 930 B1 bekannt. Bei dieser Heizeinrichtung steht ein Wärmeleitkörper mit zwei parallel nebeneinander angeordneten rohrförmigen Teilen mit den PTC-Heizelementen in thermischem Kontakt. Im Betrieb der Heizeinrichtung sind die Wärmeleitkörper vom zu erwärmenden Dieselkraftstoff umspült, wobei die zwei parallel nebeneinander angeordneten rohrförmigen Teile des Wärmeleitkörpers aus Wärmeleitblech geformt sind und dadurch eine besonders effiziente Wärmeübertragung gewährleisten sollen.

Nachteilig bei der bekannten Heizeinrichtung ist dabei jedoch, dass diese schwierig zu montieren ist, da zunächst die PTC-Heizelemente zwischen die zwei Wärmeleitkörper geklemmt werden und diese Anordnung dann in einem rohrförmigen Kunststoffgehäuse fixiert werden muss.

Der vorliegenden Erfindung liegt daher die Aufgabe zugrunde, für eine gattungsgemäße Heizeinrichtung eine verbesserte oder zumindest eine andere Ausführungsform anzugeben, die sich insbesondere durch eine vereinfachte Montage auszeichnet.

Dieses Problem wird erfindungsgemäß durch die Gegenstände der unabhängigen Ansprüche gelöst. Vorteilhafte Ausführungsformen sind Gegenstand der abhängigen Ansprüche.

Die Erfindung beruht auf dem allgemeinen Gedanken, ein aus Kunststoff ausgebildetes rohrförmiges Gehäuse zur Aufnahme mehrerer PTC-Heizelemente sowie einer Wärmeübertragungseinrichtung mit einer innenliegenden Führungseinrichtung zu versehen, welche ein lagegenaues axiales Einschieben der PTC-Heizelemente zusammen mit der Wärmeübertragungseinrichtung ermöglicht und gleichzeitig ein falsches Anordnen der PTC-Heizelemente beziehungsweise der Wärmeübertragungseinrichtung in dem Kunststoffgehäuse verhindert, wobei eine zur Wärmeübertragungseinrichtung separate Federeinrichtung vorgesehen ist, die die Wärmeübertragungseinrichtung in fixierender Weise gegen eine Führungseinrichtung vorspannt. Hierdurch wird eine einfache und lagegenaue Montage ermöglicht. Die PTC-Heizelemente stehen dabei in thermischem Kontakt mit der Wärmeübertragungseinrichtung und dem Federelement, wobei alle während des Betriebes der Heizeinrichtung von dem zu erwärmendem Kraftstoff, insbesondere von dem zu erwärmendem Dieselkraftstoff umströmt ist. Die an einer Innenseite des rohrförmigen Gehäuses vorgesehenen Führungseinrichtungen können beispielsweise als Führungsnut und/oder als Führungssteg ausgebildet sein, welche mit dem wenigstens einen PTC-Heizelement und/oder mit der Wärmeübertragungseinrichtung in oben beschriebener Weise zusammenwirken, so dass zur Montage der Heizeinrichtung die PTC-Heizelemente und die Wärmeübertragungseinrichtung lediglich axial in das Kunststoffgehäuse eingeschoben werden müssen. Dies erleichtert im Vergleich zum Stand der Technik die Montage der erfindungsgemäßen Heizeinrichtung erheblich, so dass diese kostengünstiger hergestellt werden kann. An den Wärmeübertragungselementen sind zudem stirnseitige Fixierelemente vorgesehen, welche bei vollständig in das Gehäuse eingeschobener Wärmeübertragungseinrichtung in entsprechende gehäuseseitige Ausnehmungen eingebogen sind, bzw. eingreifen. Das Abbiegen der Fixierelemente erfolgt dabei erst nach dem Erreichen der Einbaulage der Wärmeübertragungseinrichtung.

Zweckmäßig weist die Wärmeübertragungseinrichtung zwei Wärmeübertragungselemente auf, zwischen welchen die PTC-Heizelemente positioniert sind und wobei an einem Wärmeübertragungselement ein Federelement angeordnet ist, welches die Wärmeübertragungseinrichtungen und die PTC-Heizelemente gegen Führungseinrichtungen der Gehäuseinnenwand des rohrförmigen Gehäuses vorspannt. Durch die beiden Wärmeübertragungselemente sind demnach die PTC-Heizelemente beim Einbau in das Gehäuse lagefixiert, wobei das Federelement die auf die PTC-Heizelemente ausgeübte Einklemmwirkung bewirken. Zudem bewirkt das Federelement eine zuverlässige Halterung der PTC-Heizelemente in dessen Einbaulage, und zwar unabhängig von auftretenden Temperaturschwankungen. Denkbar ist hierbei auch, dass das Federelement zugleich eine Art Verrastung mit einer entsprechend profilierten Innenwand des Gehäuses eingehen, so dass das Federelement nicht nur eine Vorspannung beziehungsweise Fixierung der PTC-Heizelemente beziehungsweise der Wärmeübertragungseinrichtung in radialer Richtung gegen das Gehäuse bewirken, sondern die PTC-Heizelemente beziehungsweise die Wärmeleiteinrichtung auch in axialer Richtung gegen eine ungewollte Verlagerung relativ zum Gehäuse sichern.

Bei einer vorteilhaften Weiterbildung der erfindungsgemäßen Lösung ist die Federeinrichtung zugleich als Strömungsleitelement, das heißt als Turbolator, ausgebildet, welche eine Durchmischung des Kraftstoffes beim Durchfluss durch die Heizeinrichtung erzwingen. Die Federeinrichtung kann hierzu beispielsweise federnde Abschnitte aufweisen, welche schräg zur Durchflussrichtung des zu erwärmenden Dieselkraftstoffes angeordnet sind und welche so automatisch eine Verwirbelung des zu erwärmenden Dieselkraftstoffes beim Durchfluss durch die Heizeinrichtung erzwingen. Die erfindungsgemäße Federeinrichtung erfüllt somit zwei Funktionen gleichzeitig, nämlich einerseits eine zuverlässige Halterung des PTC-Heizelementes beziehungsweise der Wärmeübertragungseinrichtung im Gehäuse und andererseits die Durchmischung des zu erwärmenden Dieselkraftstoffes, so dass bezüglich seiner Temperatur vergleichmäßigter Dieselkraftstoff die Heizeinrichtung verlässt.

Zweckmäßig sind die beiden Wärmeübertragungselemente der Wärmeübertragungseinrichtung aus Metall, insbesondere aus Blech ausgebildet. Dies bietet zum einen den großen Vorteil einer verbesserten Wärmeübertragung und zum anderen einer kostengünstigen Ausbildung der Wärmeübertragungselemente.

Weitere wichtige Merkmale und Vorteile der Erfindung ergeben sich aus den Unteransprüchen, aus den Zeichnungen und aus der zugehörigen Figurenbeschreibung anhand der Zeichnungen.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Bevorzugte Ausführungsbeispiele der Erfindung sind in den Zeichnungen dargestellt und werden in der nachfolgenden Beschreibung näher erläutert, wobei sich gleiche Bezugszeichen auf gleiche oder ähnliche oder funktional gleiche Bauteile beziehen.

Dabei zeigen, jeweils schematisch,
- Fig. 1: eine erfindungsgemäße Heizeinrichtung,
- Fig. 2: eine Detaildarstellung eines Bereichs der erfindungsgemäßen Heizeinrichtung,
- Fig. 3a bis 3 c: verschiedene Schnittdarstellungen durch die erfindungsgemäße Heizeinrichtung,
- Fig. 4: eine weitere Ausführungsform einer erfindungsgemäßen Heizeinrichtung,
- Fig. 5,6: jeweils eine mögliche Ausführungsform der Wärmeübertragungseinrichtung.

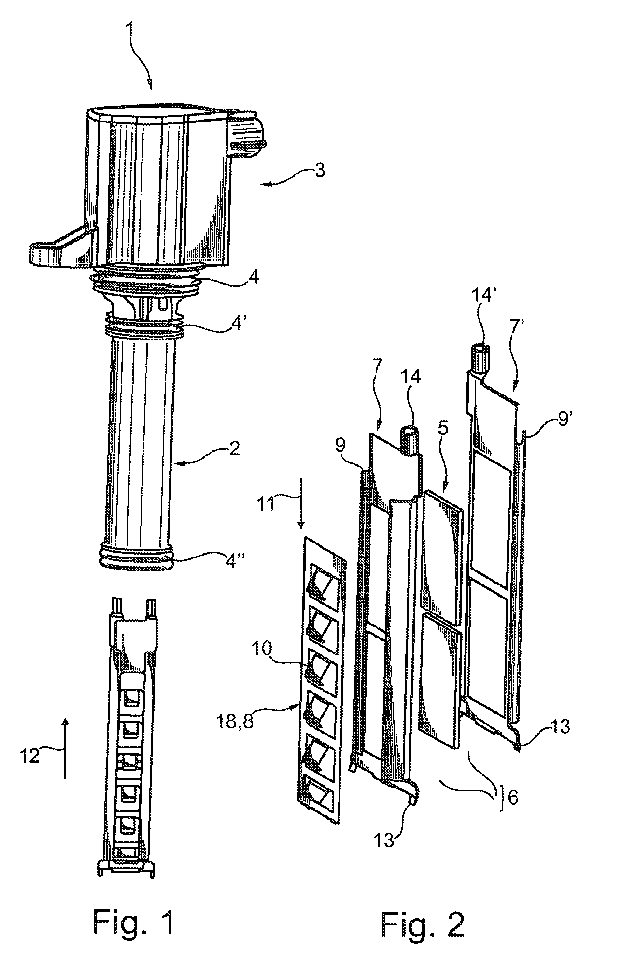

Entsprechend Fig. 1 weist eine erfindungsgemäße Heizeinrichtung 1 für Kraftstoff, insbesondere für Dieselkraftstoff, ein rohrförmiges Gehäuse 2 sowie ein daran vorzugsweise angespritztes Anschlussgehäuse 3 auf. Mit seinem rohrförmigen Gehäuse 2 ist die Heizeinrichtung 1 üblicherweise axial in einen Innenraum eines Ringfilters eingesteckt und erwärmt bei niedrigen Temperaturen den zu filternden Dieselkraftstoff, um ein Ausfällen von Paraffinanteil und damit ein Zusetzen des Ringfilters zu verhindern. An dem rohrförmigen Gehäuse 2 sind dabei insgesamt drei O-Ringdichtungen 4, 4' und 4" angeordnet, wobei in einem axialen Bereich zwischen den beiden O-Ringdichtungen 4 und 4' ein Einlass in ein Inneres des rohrförmigen Gehäuses 2 vorgesehen ist. An seinem, dem Anschlussgehäuse 3 abgewandten Ende, weist das rohrförmige Gehäuse 2 die O-Ringdichtung 4" auf, welche den Innenraum des Ringfilters in axialer Richtung abdichtet.

Innerhalb des rohrförmigen Gehäuses 2 ist mindestens ein PTC-Heizelement 5 sowie eine mit diesem in thermischem Kontakt stehende Wärmeübertragungseinrichtung 6 angeordnet. "PTC" steht hierbei für positive-temperature-coefficient. Generell ist dabei das rohrförmige Gehäuse 2 ebenso wie das Anschlussgehäuse 3 aus Kunststoff ausgebildet und vorzugsweise in einem Arbeitsgang hergestellt, insbesondere gespritzt. Während des Betriebes der Heizeinrichtung 1 strömt der zu erwärmende Dieselkraftstoff in radialer Richtung zwischen den beiden O-Ringdichtungen 4 und 4' in das Gehäuse 2 hinein und verlässt dieses in axialer Richtung unterhalb der O-Ringdichtung 4.

Wie der Fig. 2 zu entnehmen ist, sind die PTC-Heizelemente 5 zwischen zwei Wärmeübertragungselementen 7 und 7' angeordnet, welche zusammen die Wärmeübertragungseinrichtung 6 bilden. Die Fixierung der PTC-Heizelemente 5 zwischen den beiden Wärmeübertragungselementen 7 und 7' wird dabei über eine Klemmwirkung gewährleistet. Erkennbar ist dabei, dass eine den PTC-Heizelementen 5 zugewandte Seite der jeweiligen Wärmeübertragungselemente 7, 7' an die Gestalt der PTC-Heizelemente 5 angepasst ist, wodurch eine zusätzliche Fixierung erreicht werden kann. Generell sind die beiden Wärmeübertragungselemente 7 und 7' aus Metall, insbesondere aus Blech, ausgebildet, was zum einen hilft eine hohe Wärmeübertragungsrate zu erreichen und zum anderen die Herstellungskosten für derartige Wärmeübertragungselemente 7, 7' senkt, da diese konstruktiv einfach herzustellen sind. Zudem dienen die Flanken 9 und 9' der Wärmeübertragungselemente 7, 7'als Turbulatoren, um einen optimalen Wärmeübertrag auf den Kraftstoff zu erreichen. Die Form kann dabei wie dargestellt glatt sein, oder aber auch uneben. Zusätzlich können die Flanken 9 und 9'aus Untersegmenten bestehen, die unterschiedlich zu einander verkippt sind, wodurch die Erzeugung von Turbulenzen verbessert wird.

An zumindest einem der beiden Wärmeübertragungselemente 7 und 7' ist gemäß der Fig. 1 ein Federelement 8 angeordnet, welches die Wärmeübertragungseinrichtung 6, das heißt die beiden Wärmeübertragungselemente 7, 7' gegen die PTC-Heizelemente 5 und eine Gehäuseinnenwand des Gehäuses 2 spannt. Prinzipiell wird dabei der Begriff Federelement 8 und der Begriff Federeinrichtung 18 im Folgenden synonym verwendet. Erfindungsgemäß können nun die PTC-Heizelemente 5 zwischen den beiden Wärmeübertragungselementen 7 und 7' der Wärmeübertragungseinrichtung 6 eingeklemmt werden, wobei das eine Federelement 8 an einer dafür vorgesehenen Führung/Radialsteg 19 an der Gehäuseinnenwand gegengehalten ist. Alle gemäß der Fig. 2 dargestellten Komponenten werden zur Montage der erfindungsgemäßen Heizeinrichtung 1 zusammengefasst und als Ganzes in axialer Richtung in das rohrförmige Gehäuse 2 eingeschoben. Dies erleichtert den Zusammenbau der erfindungsgemäßen Heizeinrichtung 1 erheblich. Die Verspannung der Komponenten innerhalb des Gehäuses 2 kann dabei durch ein Federelement 8 erreicht werden, welches sich über entsprechende Federnasen 10 an der Innenwand des Gehäuses 2 abstützt.

Gemäß einer vorteilhaften Weiterbildung der erfindungsgemäßen Lösung ist zumindest ein Federelement 8 zugleich als Strömungsleitelement ausgebildet, welches eine Durchmischung des Kraftstoffes beim Durchfluss durch die Heizeinrichtung 1 erzwingt. Dies ist in Fig. 2 anhand der Federnasen 10 leicht erkennbar, welche bei einem Strömen des Kraftstoffes in axialer Richtung 11 durch die Heizeinrichtung 1 eine Verwirbelung desselben bewirken. Derartig ausgebildete Federelemente 8 erfüllen somit zwei Aufgaben gleichzeitig.

Betrachtet man die Wärmeschutzelemente 7 und 7' gemäß den Fig. 1 und 2 näher, so fällt auf, dass an diesen in Einschubrichtung 12 hinten Fixierelemente 13 angeordnet sind, welche bei vollständig in das Gehäuse 2 eingeschobener Wärmeübertragungseinrichtung 6 beziehungsweise vollständig eingeschobenen Wärmeübertragungselementen 7 und 7' mit entsprechenden Gegenrastvorrichtungen am Gehäuse 2 verrasten bzw. in entsprechende gehäuseseitige Ausnehmungen eingreifen. Die Fixierelemente 13 können dabei beispielsweise als Rastnasen ausgebildet sein, welche mit entsprechenden, gehäuseseitigen Rastöffnungen zusammenwirken. Denkbar sind selbstverständlich auch weitere Verrastungsmöglichkeiten, wobei beispielsweise die in radialer Richtung abstehenden Federnasen 10 des Federelementes 8 in entsprechenden, in an einer Gehäuseinnenseite des Gehäuses 2 angeordnete Rastausnehmungen eingreifen können und dadurch eine Fixierung in axialer Richtung bewirken. Alternativ können die Fixierelemente 13 nach dem Einschub umgebogen werden, um eine axiale Fixierung der Bauteile auch während des Betriebs des Kraftstofffilters zu gewährleisten.

Um das Konglomerat an Bauteilen gemäß der Fig. 2 lagerichtig in das Gehäuse 2 einschieben zu können, sind an der Innenseite des rohrförmigen Gehäuses 2 zwei Führungseinrichtungen, beispielsweise Führungsnuten vorgesehen, welche mit dem wenigstens einen PTC-Heizelement 5 und/oder mit der Wärmeübertragungseinrichtung 6 derart zusammenwirken, dass zur Montage der Heizeinrichtung 1 das PTC-Heizelement 5 und die Wärmeübertragungseinrichtung 6, bestehend aus den beiden Wärmeübertragungselementen 7 und 7', in das Gehäuse 2 axial einschiebbar sind. Durch die Führungseinrichtung kann somit der Zusammenbau einerseits erleichtert und andererseits die Qualität gesteigert werden.

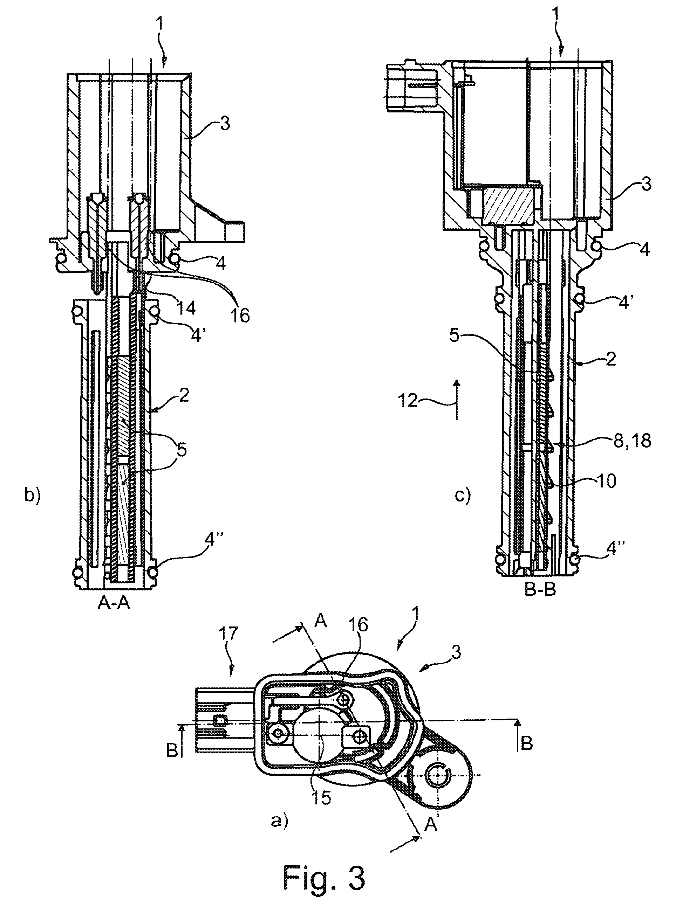

In Einschubrichtung 12 vorne sind an den Wärmeübertragungselementen 7 und 7' Kontaktelemente 14 und 14' vorgesehen, durch welche eine elektrische Anbindung an eine Stromversorgung im Anschlussgehäuse 3 erfolgen kann (vgl. Fig. 3a). Im Anschlussgehäuse 3 selbst kann ein Stecker beziehungsweise eine Kupplung eingespritzt sein, über welchen beziehungsweise über welche das PTC-Heizelement 5 mit einem elektrischen Netz verbindbar ist. Ebenso kann im Anschlussgehäuse 3 ein Bimetallelement 15 zur Steuerung der Heizeinrichtung 1 vorgesehen sein.

Gemäß der Fig. 3b sind die beiden Kontaktelemente 14 und 14' der Wärmeübertragungselemente 7 und 7' mit entsprechenden Steckern 16 und 16' im Anschlussgehäuse 3 elektrisch verbunden, wobei die Stecker 16 und 16' ihrerseits wiederum mit der Kupplung 17 elektrisch verbunden sind. An einem der Steckkontakte ist dabei das Bimetallelement 15 angeordnet, welches bei entsprechenden Temperaturen einen elektrischen Kontakt und damit die Heizleistung der Heizeinrichtung 1 unterbricht.

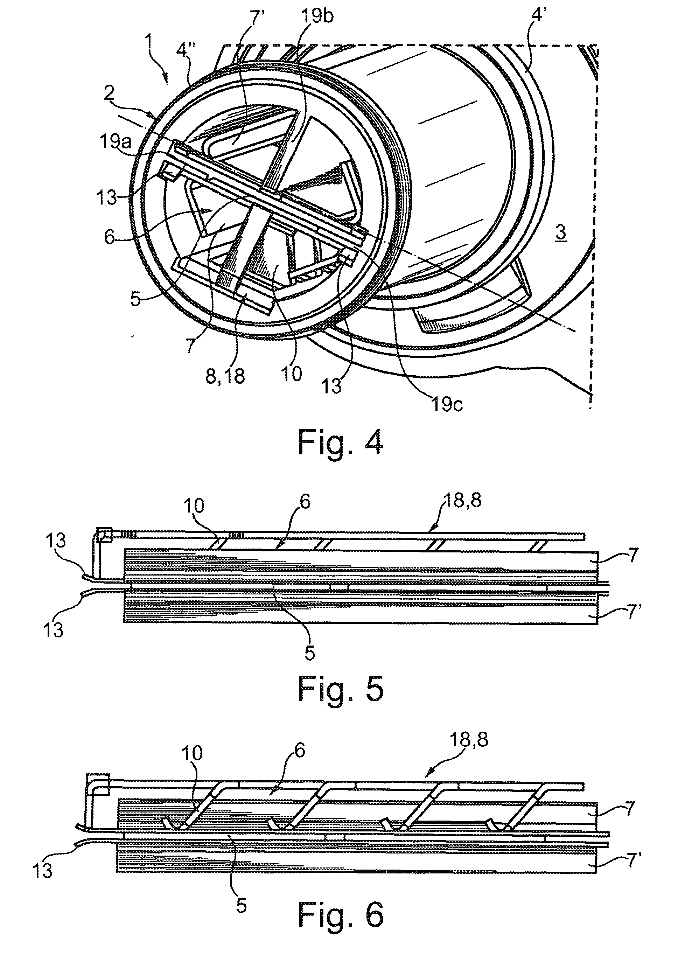

Betrachtet man die Fig. 4, so erkennt man, dass eine zur Wärmeübertragungseinrichtung 6 separate Federeinrichtung 18 vorgesehen ist, welche die Wärmeübertragungseinrichtung 6 in fixierender Weise gegen die Führungseinrichtung vorspannt. Die Führungseinrichtung weist dabei gemäß der Fig. 4 drei sich in ein Inneres des rohrförmigen Gehäuses 2 hineinerstreckende Radialstege 19a,19b,19c aufweist, wobei die Federeinrichtung 18 gegenüber des Radialsteges 19b angeordnet ist und dadurch die Wärmeübertragungseinrichtung 6 gegen den Radialsteg 19b drückt. Die drei Radialstege 19a,19b,19c und die Federeinrichtung 18 sind dabei um jeweils 90° versetzt zueinander angeordnet. Durch die Federnasen 10 ist diese gleichzeitig als Turbolator ausgebildet ist, welcher eine Durchmischung des Kraftstoffes beim Durchfluss durch die Heizeinrichtung 1 erzwingt.

Die Fixierelemente 13 werden bei der gemäß der Fig. 4 dargestellten Ausführungsform erst nach dem vollständigen Einschieben der Wärmeübertragungseinrichtung 6 in das Gehäuse 2 umgebogen und so in ihre fixierende Lage gebracht, in welcher sie in gehäuseseitige Ausnehmungen eingreifen und ein Herausfallen der Wärmeübertragungseinrichtung 6 aus dem Gehäuse 2 zuverlässig verhindern.

## Patentansprüche

1. Heizeinrichtung (1) für Kraftstoff, insbesondere für Dieselkraftstoff,
- mit zumindest einem PTC-Heizelement (5) und einer mit diesem in thermischem Kontakt stehenden Wärmeübertragungseinrichtung (6), die zwei Wärmeübertragungselemente (7, 7') aufweist, zwischen denen das mindestens eine PTC-Heizelement (5) angeordnet, insbesondere eingeklemmt, ist,
- mit einem die Wärmeübertragungseinrichtung (6) und das wenigstens eine PTC-Heizelement (5) umgebenden rohrförmigen Gehäuse (2) aus Kunststoff,
- wobei der während des Betriebes der Heizeinrichtung (1) zu erwärmende Dieselkraftstoff durch das Gehäuse (2) und um die Wärmeübertragungseinrichtung (6) strömt,
- wobei an einer Innenseite des rohrförmigen Gehäuses (2) eine Führungseinrichtung vorgesehen ist, welche mit dem wenigstens einen PTC-Heizelement (5) und/oder mit der Wärmeübertragungseinrichtung (6) derart zusammenwirkt, dass zur Montage der Heizeinrichtung (1) das mindestens eine PTC-Heizelement (5) und die Wärmeübertragungseinrichtung (6) in das Gehäuse (2) axial einschiebbar sind,
- wobei eine zur Wärmeübertragungseinrichtung (6) separate Federeinrichtung (8,18) vorgesehen ist, welche die Wärmeübertragungseinrichtung (6) in fixierender Weise gegen die Führungseinrichtung verspannt,
**dadurch gekennzeichnet,**
**dass** an den Wärmeübertragungselementen (7, 7') stirnseitige Fixierelemente (13) vorgesehen sind, welche bei vollständig in das Gehäuse (2) eingeschobener Wärmeübertragungseinrichtung (6) in entsprechende gehäuseseitige Ausnehmungen eingebogen sind, bzw. eingreifen.

2. Heizeinrichtung nach Anspruch 1,
**dadurch gekennzeichnet,**
**dass** die Führungseinrichtung drei sich in ein Inneres des rohrförmigen Gehäuses (2) hineinerstreckende Radialstege (19a, 19b, 19c) aufweist.

3. Heizeinrichtung nach Anspruch 2,
**dadurch gekennzeichnet,**
**dass** die drei Radialstege (19a,19b,19c) und die Federeinrichtung (18) um jeweils 90° versetzt zueinander angeordnet sind.

4. Heizeinrichtung nach einem der Ansprüche 1 bis 3,
**dadurch gekennzeichnet,**
**dass** die Federeinrichtung (8,18) gleichzeitig als Turbolator ausgebildet ist, welcher eine Durchmischung des Kraftstoffes beim Durchfluss durch die Heizeinrichtung (1) erzwingt.

5. Heizeinrichtung nach einem der Ansprüche 1 bis 4,
**dadurch gekennzeichnet,**
**dass** an wenigstens einem Wärmeübertragungselement (7, 7') in Einschubrichtung (12) vorne ein Kontaktelement (14, 14') vorgesehen ist, über welches eine elektrische Anbindung an eine Stromversorgung in einem Anschlussgehäuse (3) erfolgt.

6. Heizeinrichtung nach Anspruch 5,
**dadurch gekennzeichnet,**
**dass** das Anschlussgehäuse (3) aus Kunststoff ausgebildet und an das Gehäuse (2) der Heizeinrichtung (1) angespritzt ist.

7. Heizeinrichtung nach Anspruch 5 oder 6,
**dadurch gekennzeichnet,**
- **dass** das Anschlussgehäuse (3) einen Stecker oder eine Kupplung (17) aufweist, über welche(n) es mit einem elektrischen Netz verbindbar ist, und/oder
- **dass** in dem Anschlussgehäuse (3) ein Bimetallelement (15) zur Steuerung der Heizeinrichtung (1) vorgesehen ist.

8. Heizeinrichtung nach einem der Ansprüche 1 bis 7,
**dadurch gekennzeichnet,**
**dass** die beiden Wärmeübertragungselemente (7, 7') aus Metall, insbesondere aus Blech, ausgebildet sind.

9. Heizeinrichtung nach einem der Ansprüche 1 bis 8,
**dadurch gekennzeichnet,**
**dass** die Federeinrichtung aus Metall, insbesondere aus Blech, ausgebildet ist.

10. Kraftstofffilter mit einer Heizeinrichtung (1) nach einem der Ansprüche 1 bis 9.

## Claims

1. A heating device (1) for fuel, in particular for diesel fuel,
- with at least one PTC heating element (5) and a heat transfer device (6) in thermal contact with the latter, which exhibits two heat transfer elements (7, 7'), between which the at least one PTC heating element (5) is arranged, in particular clamped;
- with a tubular casing (2) made of plastic that envelops the heat transfer device (6) and the at least one PTC heating element (5);
- wherein the diesel fuel to be heated during operation of the heating device (1) flows through the casing (2) and around the heat transfer device (6);
- wherein a guiding device is provided on an interior side of the tubular casing (2), which interacts with the at least one PTC heating element (5) and/or the heat transfer device (6) in such a way that at least one PTC heating element (5) and the heat transfer device (6) can be axially inserted into the casing (6) in order to assemble the heating device (1),
- wherein a spring system (8, 18) separate from the heat transfer device (6) is provided, which tensions the heat transfer device (6) against the guiding device so as to fix it in place.
**characterized in that**
the front of the heat transfer elements (7, 7') is provided with fixation elements (13), which mesh or engage with corresponding recesses in the casing once the heat transfer device (6) has been completely inserted into the casing (2).

2. The heating device according to claim 1, **characterized in that** the guiding device exhibits three radial webs (19a, 19b, 19c) that extend into the interior of the tubular casing (2).

3. The heating device according to claim 2, **characterized in that** the three radial webs (19a, 19b, 19c) and the spring system (18) are each offset by a respective 90° relative to each other.

4. The heating device according to one of claims 1 to 3, **characterized in that** the spring system (8, 18) is simultaneously designed as a turbolator, which forces the fuel to become thoroughly mixed while flowing through the heating device (1).

5. The heating device according to one of claims 1 to 4, **characterized in that** a contact element is provided on at least one heat transfer element (7, 7') toward the front in the insertion direction (12), which is used to establish an electrical connection to the power supply in a terminal enclosure (3).

6. The heating device according to claim 5, **characterized in that** the terminal enclosure (3) is made of plastic, and gated to the casing (2) of the heating device (1).

7. The heating device according to claim 5 or 6, **characterized in that**
- the terminal enclosure (3) exhibits a plug or coupling (17), with which it can be connected with an electrical network, and/or
- the terminal enclosure (3) incorporates a bimetal element (15) for controlling the heating device (1).

8. The heating device according to one of claims 1 to 7, **characterized in that** the two heat transfer elements (7, 7') are made of metal, in particular sheet metal.

9. The heating device according to one of claims 1 to 8, **characterized in that** the spring system is made of metal, in particular sheet metal.

10. A fuel filter with a heating device (1) according to one of claims 1 to 9.

## Revendications

1. Dispositif de chauffage (1) de carburant, notamment de carburant diesel,
- comportant au moins un élément de chauffage PTC (5) et un dispositif de transmission de chaleur (6) en contact thermique avec celui-ci, qui présente deux éléments de transmission de chaleur (7, 7'), entre lesquels au moins un élément de chauffage PTC (5) est disposé, notamment coincé,
- comportant un logement (2) tubulaire en plastique enveloppant le dispositif de transmission de chaleur (6) et au moins un élément de chauffage PTC (5),
- dans lequel pendant le fonctionnement du dispositif de chauffage (1), le carburant diesel à chauffer s'écoule à travers le logement (2) et autour du dispositif de transmission de chaleur (6),
- dans lequel sur un côté intérieur du logement tubulaire (2) un dispositif de guidage est prévu, lequel coopère avec au moins un élément de chauffage PTC (5) et/ou avec le dispositif de transmission de chaleur (6) de telle sorte que en vue du montage du dispositif de chauffage (1), au moins un élément de chauffage PTC (5) et le dispositif de transmission de chaleur (6) peuvent être enchâssés axialement dans le logement (2),
- dans lequel un dispositif de ressort élastique (8, 18) séparé du dispositif de transmission de chaleur (6) est prévu, lequel serre le dispositif de transmission de chaleur (6) contre le dispositif de guidage de manière à le fixer,
**caractérisé en ce que**
des éléments de fixation frontaux (13) sont prévus sur les éléments de transmission de chaleur (7, 7'), lesquels quand le dispositif de transmission de chaleur (6) est complètement enchâssé dans le logement (2) sont infléchis dans, respectivement s'engagent dans des évidements correspondants du côté du logement.

2. Dispositif de chauffage selon la revendication 1,
**caractérisé en ce que**
le dispositif de guidage présente trois gradins radiaux (19a, 19b, 19c) s'étendant à l'intérieur du logement tubulaire (2).

3. Dispositif de chauffage selon la revendication 2,
**caractérisé en ce que**
les trois gradins radiaux (19a, 19b, 19c) et le dispositif de ressort élastique (18) sont respectivement disposés en décalage de 90° les uns par rapport aux autres.

4. Dispositif de chauffage selon une des revendications 1 à 3,
**caractérisé en ce que**
le dispositif de ressort élastique (8, 18) est réalisé simultanément comme un turbulateur, qui contraint un mélange du carburant lors de l'écoulement à travers le dispositif de chauffage (1).

5. Dispositif de chauffage selon une des revendications 1 à 4,
**caractérisé en ce que**
sur au moins un élément de transmission de chaleur (7, 7') dans la direction d'insertion (12) à l'avant, un élément de contact (14, 14') est prévu, par l'intermédiaire duquel une liaison électrique à une alimentation électrique dans un boîtier de connexion (3) a lieu.

6. Dispositif de chauffage selon la revendication 5,
**caractérisé en ce que**
le boîtier de connexion (3) est réalisé en plastique et est moulé par injection sur le boîtier (2) du dispositif de chauffage (1).

7. Dispositif de chauffage selon les revendications 5 ou 6,
**caractérisé en ce que**
- le boîtier de connexion (3) présente un connecteur ou un couplage (17), par l'intermédiaire desquels il peut être relié à un réseau électrique, et/ou
- dans le boîtier de connexion (3), un élément bimétallique (15) pour commander le dispositif de chauffage (1) est prévu.

8. Dispositif de chauffage selon une des revendications 1 à 7,
**caractérisé en ce que**
les deux éléments de transmission de chaleur (7, 7') sont réalisés en métal, notamment en tôle.

9. Dispositif de chauffage selon une des revendications 1 à 8,
**caractérisé en ce que**
le dispositif de ressort élastique est réalisé en métal, notamment en tôle.

10. Filtre à carburant comportant un dispositif de chauffage (1) selon une des revendications 1 à 9.
